(19) Europäisches Patentamt / European Patent Office / Office européen des brevets

(11) **EP 2 467 960 B1**

(12) **EUROPEAN PATENT SPECIFICATION**

(45) Date of publication and mention of the grant of the patent:
**09.01.2019 Bulletin 2019/02**

(21) Application number: **10810256.7**

(22) Date of filing: **30.07.2010**

(51) Int Cl.:
**H04J 14/02** *(2006.01)*　　　**H04Q 11/00** *(2006.01)*

(86) International application number:
**PCT/SE2010/050872**

(87) International publication number:
**WO 2011/021976 (24.02.2011 Gazette 2011/08)**

(54) **METHODS AND NODE ENTITIES IN OPTICAL NETWORKS**

VERFAHREN UND KNOTENENTITÄTEN IN OPTISCHEN NETZWERKEN

PROCÉDÉS ET ENTITÉS DE NOEUD DANS DES RÉSEAUX OPTIQUES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **21.08.2009 US 235819 P**

(43) Date of publication of application:
**27.06.2012 Bulletin 2012/26**

(73) Proprietor: **Telefonaktiebolaget LM Ericsson (publ)**
**164 83 Stockholm (SE)**

(72) Inventors:
• **BELLAGAMBA, Elisa**
**S-116 62 Stockholm (SE)**
• **BOTTARI, Giulio**
**I-57123 Livorno (IT)**
• **DUTTI, Enrico**
**I-57125 Livorno (IT)**

(74) Representative: **Brann AB**
**P.O. Box 3690**
**Drottninggatan 27**
**103 59 Stockholm (SE)**

(56) References cited:
　　WO-A1-2009/036677　　WO-A1-2010/022662
　　WO-A1-2010/097053

• PINART C ET AL: "Lightpath provisioning scheme for all-optical networks integrating multi-layer quality of transmission information", PHOTONICS IN SWITCHING, 2008. PS 2008. INTERNATIONAL CONFERENCE ON, IEEE, PISCATAWAY, NJ, USA, 4 August 2008 (2008-08-04), pages 1-2, XP031443932, ISBN: 978-1-4244-4326-0
• AZODOLMOLKY S ET AL: "A survey on physical layer impairments aware routing and wavelength assignment algorithms in optical networks", COMPUTER NETWORKS, ELSEVIER SCIENCE PUBLISHERS B.V., AMSTERDAM, NL, vol. 53, no. 7, 13 May 2009 (2009-05-13), pages 926-944, XP026007938, ISSN: 1389-1286, DOI: 10.1016/J.COMNET.2008.11.014 [retrieved on 2008-12-11]
• BERNSTEIN GROTTO NETWORKING Y LEE D LI HUAWEI G MARTINELLI CISCO G: "A Framework for the Control of Wavelength Switched Optical Networks (WSON) with Impairments; draft-bernstein-ccamp-wson-impairments-05. txt", A FRAMEWORK FOR THE CONTROL OF WAVELENGTH SWITCHED OPTICAL NETWORKS (WSON) WITH IMPAIRMENTS; DRAFT-BERNSTEIN-CCAMP-WSON-IMPAIRME NTS-05. TXT, INTERNET ENGINEERING TASK FORCE, IETF; STANDARDWORKINGDRAFT, INTERNET SOCIETY (ISOC) 4, RUE DES FALAISES CH- 1, no. 5, 5 May 2009 (2009-05-05), XP015062272, [retrieved on 2009-05-05]

**EP 2 467 960 B1**

- JUN HE ET AL: "QoT-Aware Routing in Impairment-Constrained Optical Networks", GLOBAL TELECOMMUNICATIONS CONFERENCE, 2007. GLOBECOM '07. IEEE, IEEE, PISCATAWAY, NJ, USA, 30 November 2007 (2007-11-30), pages 2269-2274, XP031196361, ISBN: 978-1-4244-1042-2
- WANG L. ET AL ICC '09. IEEE INTERNATIONAL CONFERENCE ON COMMUNICATIONS 14 June 2009, PISCATAWAY, NJ, USA, pages 1 - 6, XP031506196
- ZHAO J.-J. ET AL: 'Routing architecture based on PCE in next generation optical networks' PEITS 2009 - 2009 2ND CONFERENCE ON POWER ELECTRONICS AND INTELLIGENT TRANSPORTATION SYSTEM vol. 2, 2009, pages 338 - 341, XP031624159

**Description**

TECHNICAL FIELD

The present invention relates to methods and node entities in Optical Networks. More specifically, methods and node entities for distributing Physical Impairment parameters and for establishing optical paths for user traffic are provided.

BACKGROUND

A Wavelength Switched Optical Network (WSON) supports end-to-end optical paths, called lightpaths, between nodes requiring connection in the network. Intermediate nodes in this type of network support wavelength switching and may also support wavelength conversion. In contrast with point-to-point optical communication links which provide high-capacity transport, always between the same pair of nodes, a WSON supports the setting up and tearing down of lightpaths between pairs of nodes of a network having a more complex topology, such as a ring, interconnected rings or mesh topology. A Routing and Wavelength Assignment (RWA) function of the WSON performs the tasks of routing a lightpath across the WSON and assigning a wavelength to the lightpath. An example is disclosed in the document 'Lightpath provisioning scheme for all optical networks integrating multi-layer quality of transmission information' Photonics in Switching, 2008, Internation Conference on IEEE, published on 4 August 2008.

Transmission at optical wavelengths suffers from a range of physical impairments and it is advantageous to verify the feasibility of an end-to-end lightpath across a WSON before the lightpath is used to carry traffic. The process of checking the feasibility of an optical path is called impairment validation (IV) and can be performed by a software tool which analyses impairments (linear and non-linear) accumulated during optical signal propagation and the characteristics of the hardware crossed by the optical signal (e.g. amplifier types, fibre types). A Quality of Transmission (QoT) parameter is evaluated and compared with a threshold which represents a desired maximum Bit Error Rate at the receiver, e.g. 10E-15. Conventionally, a network calculation entity evaluates the QoT of the optical path, and operates off-line. The Ericsson term for this entity is a Photonic Link Design Engine (PLDE).

A review of Impairment Aware Routing and Wavelength Assignment (IA-RWA) in optical networks is given in an Internet Engineering Task Force (IETF) document "A Framework for the Control of Wavelength Switched Optical Networks (WSON) with Impairments", draft-bernstein-ccamp-wson-impairments-05.txt. One possible approach to performing Impairment Aware Routing and Wavelength Assignment (IA-RWA) is for a Routing and Wavelength Assignment (RWA) function to select a routing of a lightpath and then make a call to an Impairment Validation (IV) function to validate the lightpath.

The WSON is based on Wavelength Division Multiplexing (WDM) in which user traffic is carried by channels of different optical wavelengths. In "traditional" WDM networks, each wavelength path is statically configured and planned to be feasible at the "end of life" network conditions. With the deployment of Remotely Reconfigurable Optical Add-Drop Multiplexers (RROADM), optical cross-connects (OXC), and tuneable laser, ONs have become more dynamic, and operators can flexibly set up and tear down wavelength paths to carry user traffic.

Unfortunately, the increasing WDM bit rates from 2.5G to 40G (and in future 100G), combined with the increasing number of wavelengths from 32 to 80 (and higher in the future) and the narrowing of channel spacing from 200 GHz to 25 GHz, impacts the routing of the optical signal due to Physical Impairments (PI).

The impact of physical impairments on the optical signal on different optical paths is preferably considered at the network planning level if that is a viable approach for the considered network. In this approach the operator can pre-validate all the end-to-end optical paths through the domain of transparency for each expected bit rate. However, the typical approach is to consider the worst case values ("end of life" values) and to perform path computation in leveraging this data. The problem is that this approach brings to a very conservative routing and prevents any sort of dynamic wavelength provisioning and recovery (i.e. On the Fly recovery is not possible).

SUMMARY

One object of the present invention is to provide a dynamic path computation in WSON networks. To provide this object, a fast way of getting a snapshot of the physical status of the network would be of paramount importance in WSON and would allow a dynamic, on-line, path computation both centralized or distributed, i.e. in each ingress node.

In accordance by the present invention, this object is achieved by providing values of a set of physical impairment parameters to the path computation entity of a WSON. The Physical Impairment (PI) parameter values are obtained by measurement and distribution of said parameter value among network nodes. Further, it is suggested to distribute the PI values in a link state routing protocol.

A first aspect of the present invention is a method for an optical network of establishing Optical Paths for user traffic by routing and wavelength assignment of optical channels carried in optical links of a Wavelength Switched Optical Network (WSON). The method involves obtaining a set of Physical Impairment (PI) parameter values affecting the optical channels, wherein at least one of said Physical Impairment (PI) parameter values are obtained by measurement and distribution of said parameter value among network nodes connected to said Optical Paths in the Wavelength. Then, a feasibility verdict is determined for each optical path candidate by performing path computation for each optical path involving its obtained PI parameter values, and thereafter, the optical signals are routed via Optical Paths based upon said feasibility verdicts for different Optical Paths.

Different embodiments of the method are also presented in the description and dependent claims.

Further one aspect of the present invention is a method in a node of the optical network for establishing Optical Paths for user traffic by routing and wavelength assignment of optical channels carried in optical links of a Wavelength Switched Optical Network (WSON). The method involves obtaining a set of Physical Impairment (PI) parameter values affecting the optical channels, wherein at least one of said Physical Impairment (PI) parameter values are obtained by measurement and distribution of said parameter value among network nodes connected to said Optical Paths in the Wavelength. Then, a feasibility verdict is determined for each optical path candidate by performing path computation for each optical path involving its obtained PI parameter values.

Different embodiments of the method are also presented in the description and dependent claims.

Yet another aspect of the present invention is a method for distributing Physical Impairment (PI) parameter values for establishing Optical Paths for user traffic by routing and wavelength assignment of optical channels carried in optical links of a Wavelength Switched Optical Network (WSON). The method involves the determination of values of Physical Impairment (PI) parameter values affecting the optical channels, generation of a structured set of the Physical Impairment (PI) parameter values, and the communication, i.e. distribution of said structured set to a at least one node of the network node having path computing capability.

Different embodiments of the method are also presented in the description and dependent claims.

An additional aspect of the present invent is a node entity for establishing Optical Paths for user traffic by routing and wavelength assignment of optical channels carried in optical links of a Wavelength Switched Optical Network (WSON). Said node entity comprises path computation capability configured to determine a feasibility verdict for each optical path candidate by performing path computation involving for each optical path its obtained PI parameter values. Routing means configured to route optical signals via Optical Paths based upon said feasibility verdicts for different Optical Paths is also provided. The entity is also provided with receiving means (120) configured to obtain a structured set of Physical Impairment (PI) parameter values affecting the optical channels, wherein at least one of said Physical Impairment (PI) parameter values are obtained by measurement and distribution of said parameter value among network nodes connected to said Optical Paths in the Wavelength Switched Optical Network..

Different embodiments of the node entity are also presented in the description and dependent claims.

Yet another aspect of the invention is a node entity for distributing Physical Impairment parameter values for establishing Optical Paths for user traffic by routing and wavelength assignment of optical channels carried in optical links of a Wavelength Switched Optical Network (WSON). The node entity comprises measurement means configured to determine values of Physical Impairment (PI) parameter values affecting the optical channels, a PI parameter set generating functional block (configured to generate a structured set of the Physical Impairment (PI) parameter values , and to transmit said structured set to a at least one node of the network node having path computing capability.

Different embodiments of the node entity are also presented in the description and dependent claims.

One advantage of the present invention is that it provides a dynamic path computation and establishment of optical paths. In addition, a centralized device (NMS) could subsequently monitor the already routed traffic and react to signal degradation by recomputing alternative and more robust routes.

Further one advantage is that dynamic advertising of the physical impairment parameters related to the wavelength grouped in the network links is provided. This is a necessary action for a dynamic path computation in WSON networks.

Yet another advantage is that the invention provides possible encodings of the PI parameters in a control plane protocol and an indication of choice among them.

## BRIEF DESCRIPTION OF THE DRAWINGS

The foregoing, and other, objects, features and advantages of the present invention will be more readily understood upon reading the following detailed description in conjunction with the drawings in which:

Figure 1    is a block diagram of an exemplary network with a mesh topology of links between nodes in which systems and methods described herein may be implemented;

Figure 2    is a block diagram illustrating the functional blocks of an impairment verification process;

Figure 3    is a block diagram illustrating the control plane for implementing impairment estimation process in figure 2;

Figure 4        is a block diagram illustrating two nodes in a WSON network wherein the present invention is implemented;

Figure 5        is a flow chart describing embodiments of the method according the invention;

Figure 6        is a flow chart describing embodiments of the method according the invention;

Figure 7        is a flow chart describing embodiments of the method according the invention;

Figure 8A       is a block diagram illustrating an example of a fiber span between two adjacent Network Elements;

Figure 8B       is illustrating a cross-section B-B of the illustrated fiber span in Figure 8A;

Figure 9        is a block diagram illustrating an example of a Photonic Link Design Engine.

DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced and other embodiments that depart from these specific details. In other instances, detailed descriptions of well known methods, devices, and circuits are omitted so as not to obscure the description of the present invention with unnecessary detail.

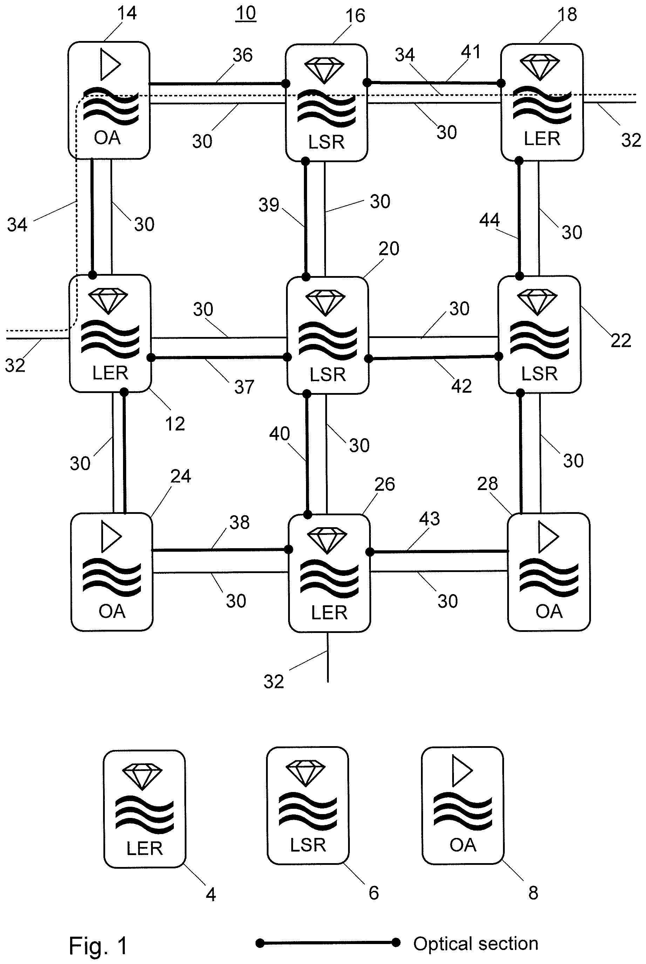

Figure 1 shows an optical communication network 10 with a mesh topology of links 30 between nodes. Nodes of the network 10 comprise routers/muxers 4, 6 which are capable of switching traffic at particular wavelengths, and may also switch traffic between different wavelengths. Two types of routers/muxers are shown in Figure 1: Label Edge Routers (LER)/Reconfigurable Optical Add-Drop Multiplexers (ROADM) 4 and Label Switching Routers (LSR)/Wavelength Cross Connects (WXC) 6. LERs/ ROADMs 4 are positioned at the edge of the network 10 and interface 32 with other networks. LERs form endpoints of a lightpath. Label Switching Routers (LSR)/Wavelength Cross Connects (WXC) 6 with Wavelength Selective Switching (WSS) are positioned at intermediate nodes of the network 10 and are capable of switching traffic between different wavelengths, if required. The network can also include transition nodes comprising Optical Amplifiers (OA) 8 to amplify optical signals.

A lightpath for carrying traffic is established between a pair of LERs/ROADMs 4. As an example, a lightpath 34 can be set up between node 12 and node 18 via node 16. The lightpath 34 comprises an optical section 36 between nodes 12 and 16 and an optical section 41 between nodes 16 and 18. Optical section 36 includes an optical amplifier 14. At node 16, traffic may remain on the same wavelength, or it may be switched between wavelengths, so that the lightpath 34 uses a first wavelength on optical section 36 and a second wavelength on optical section 41.

When using Impairment Aware Routing and Wavelength Assignment (IA-RWA) in such a network, there are conceptually three general classes of processes to be considered: Routing (R), Wavelength Assignment (WA), and Impairment Validation (IV), even denoted Impairment Estimation.

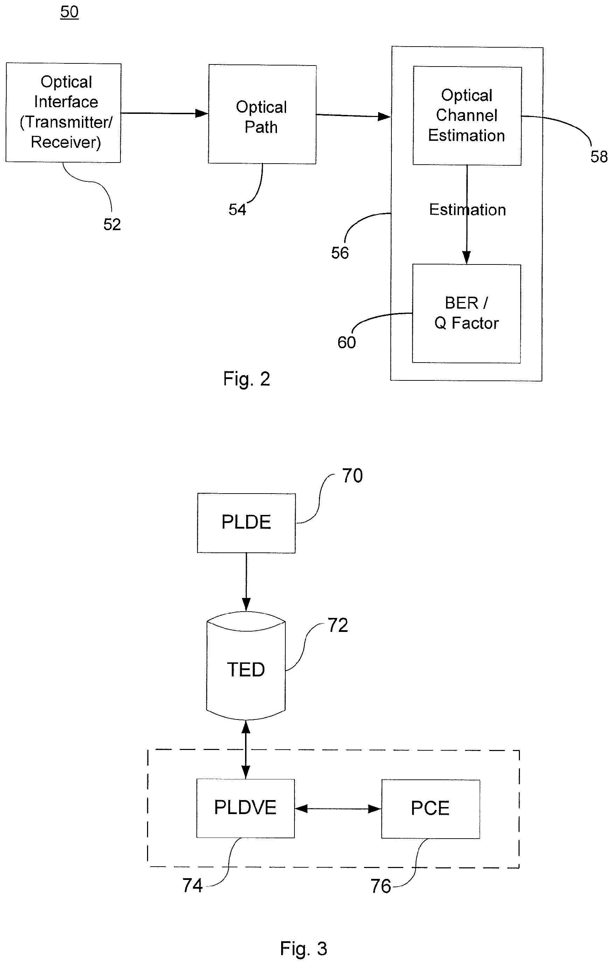

In figure 2, the impairment estimation process 50 is illustrated with functional blocks. These blocks are independent of any control plane architecture, i.e. they can be implemented by the same or by different control plane functional blocks.

The functional blocks of the model are the Optical Interface block 52, Optical Path 54, and the Estimation block 56.

The optical interface block 52 represents where optical signals are transmitted or received and defines the properties and characteristics at the end points path. For WSON, a minimum set of interface characteristics has to be considered. Thus, only a significant subset of parameters for an interface has to be considered. The transmit interface and receive interface might consider a different subset of properties. The choice of what set of PI parameters to use has to be considered for the feasibility assessment of the optical path, is in general left to the network operator: for one operator, the amplified Spontaneous Emission (ASE) noise might be the only limiting constraint while, for another, the Chromatic Dispersion (CD) might be the limiting one.

The optical path block 54 represents all kinds of impairments affecting a wavelength as it traverses the networks through links and nodes. In the case where the control plane has impairment awareness, this block 54 will not be present. Otherwise, this function must be implemented in some way via the control plane.

The estimation block 56, which comprises an optical channel estimation block 58 and a BER/Factor block 60, implements the decision function for path feasibility. Depending on the impairment awareness level of approximation, this function block may be more or less complex. The optical channel estimation block 58 perform Q factor estimations by means of the received physical impairments (PI) parameter values received from the optical interface and optical path blocks 52, 54. The estimated Q factors are compared in a BER/Factor block 60 with a predefined Bit Error Rate (BER) value for determining a feasibility verdict for a lightpath.

Figure 3 shows entities of a control plane for implementing the above described impairment estimation process 50 and IA-RWA, i.e. entities used in the planning, calculating and routing of lightpaths. A Photonic Link Design Engine (PLDE) 70 calculates parameters for interfaces of each optical section 36-43 (see figure 1) of the network 10. The interface can be defined in terms of one or more of a bit rate, line coding type and modulation type. A set of parameters is calculated for interfaces supported by an optical section. The set of parameters for an interface of an optical section are indicative of transmission quality along the optical section, taking into account the traffic type (bit rate, modulation, line coding) and the impairments of the optical section. The PLDE 70 stores the calculated parameters for each interface and each optical section in a Traffic Engineering Database (TED) 72. A Path Computation Entity (PCE) 76 responds to requests for the routing of lightpaths in the network 10. The Path Computation Entity (PCE) 74 uses a Photonic Link Design Virtual Engine (PLDVE) 74 to determine the feasibility of possible routings of a requested lightpath across network 10. PLDVE 74 uses the pre-computed parameters, stored in TED 72, for each optical section 30-39 of the network 10 to determine whether a routing of the requested lightpath is feasible. Parameters for the optical sections in a candidate lightpath are analytically combined to determine if the path is feasible.

As optical transport technology evolves, the set of constraints and impairments that will need to be considered may change. The PCE and Control Plane (PC) design should therefore be as flexible as possible, allowing new parameters to be included as necessary. At the same time, messages carrying the set of PI parameters should be flexible to carry all the parameters that are not set statically in the TED 72.

Considering the WSON scenario, the PCE is not only devoted to path computation but is also in charge of the feasibility assessment of the computed path. That is because every path must arrive on the receiver with a Bit Error Rate (BER) greater than a predefined threshold (usually 10-15 after the FEC correction, if present).

The network architecture considered is based on a centralized or distributed path computation capability positioning, i.e. PCE positioning. In addition, a centralized device Network Management System (NMS) could subsequently monitor the already routed traffic and react to signal degradation by recomputing alternative and more robust routes. The feasibility verification may be performed using the PLDE which leverages on a TED containing topology and traffic engineering information but also optical related parameters.

So, a fast way to have a snapshot of the physical status of the network would be of paramount importance in WSON and would allow a dynamic, on-line, PCE both centralized, i.e. in a NMS, or distributed, e.g. in each ingress node.

The present invention provides dynamic advertising of the physical impairment parameters related to the wavelength grouped in the network links. This is a necessary action for a dynamic path computation in WSON networks.

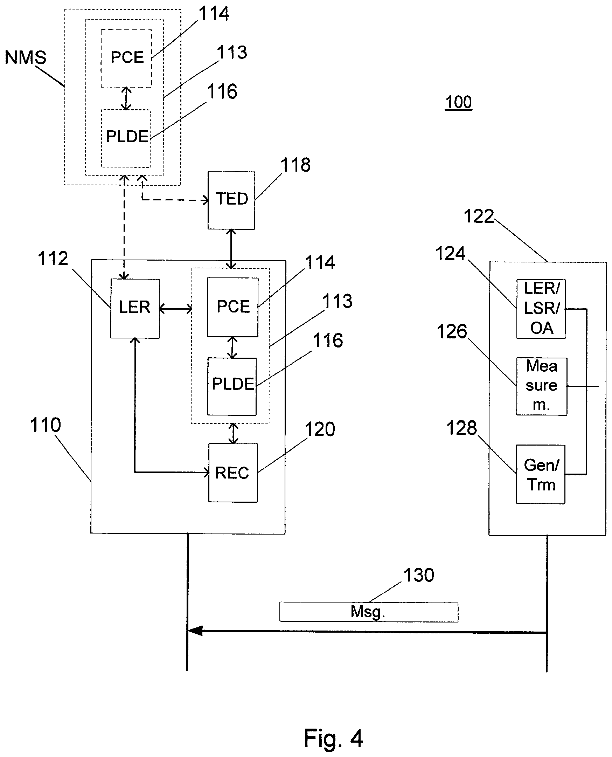

Figure 4 shows two nodes in a WSON network 100 wherein the present invention is implemented. According to embodiments of the present invention, the first node 110 may be an ingress node comprising a Label Edge Router (LER) 112. The first node has path computation capability, either involved in the node as a functionality block 113 or by communication with another external node in which the path computation capability is disposed. If the path computation capability is positioned in a node of the network, the positioning is said to be distributed. On the other hand, if the path computation capability is positioned in an external node, e.g. a NMS node, the positioning is said to be centralized. The path computation capability is a functionality block 113 involving a Path Computation Entity (PCE) 114 and a Photonic Link Design Engine (PLDE) 116. The path computation capability block is further configured to communicate information with a Traffic Engineering Database (TED) 118. The PCE 114 and PLDE 116 have already been discussed in connection with figure 3.

Further, the first node comprises an entity 120 for receiving messages, such as distributed routing protocols, based on Open Shortest Path First (OSPF) with General Multi-Protocol Label Switching (GMPLS) extensions. The information transported by the routing protocol shall provide all the parameters necessary to enable the PCE 114 and PLDE 116 to evaluate Quality of Transmission (QoT), even denoted Quality of Traffic, and path feasibility verdicts,. Thus, the message receiver 120 is configured to forward the received parameter information, e.g. physical impairment parameter values, to the path computation block 113, which is configured to forward the result of the estimations to the LER for performing routing decisions by means of said result.

As illustrated in figure 4, the network architecture considered is based on a centralized or distributed path computation capability positioning, i.e. PCE positioning. The path computation functionality block 113 with the PCE 114 and PLDE is situated, or centralized, in the NMS node instead of a routing node 110.

The second node 122 is another node of the network. It comprises a Network Element (NE) functionality block 124, which may be a LER, Label Switching Router (LSR) or Optical Amplifiers (OA). Further, it comprises a measuring means 126 for measuring the current, dynamic values of some of the physical parameters, which causes the impairments, or physical constraints, which prevent an optical signal to propagate without any deterioration. The parameter information comprising the measured values of said parameters are sent, or signalled, to the node comprising path computation capabilities in a message 130, such as a distributed routing protocol. The second node 122 is therefore provided with a functionality block 128 that is configured to generate the message 130 according to a certain protocol, e.g. standard rules, and send the message 130 to the first node 110 with said capabilities. The entity 120 for receiving messages in the first node 110 will receive each sent message 130 from nodes in the network and forward the content to the PLDE 116.

One aspect of the invention is therefore a method for establishing optical lightpaths for user traffic.

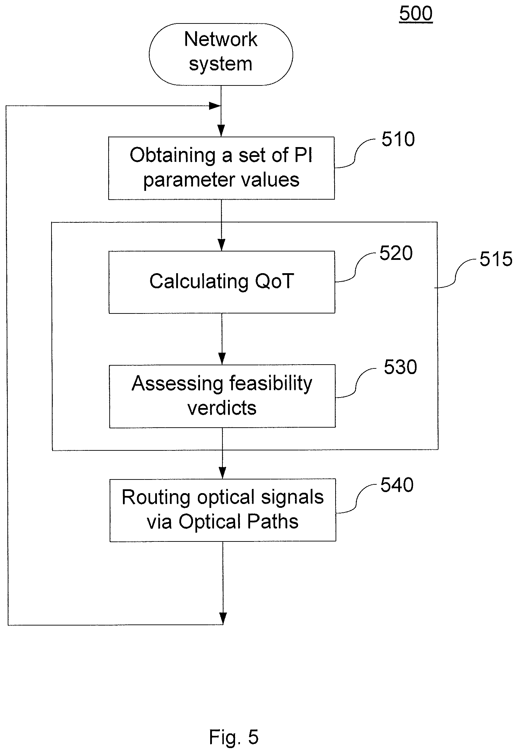

Figure 5 is a flow chart describing embodiments of the method according the invention performed in a meshed network system. It is a method for an optical network establishing Optical Paths, i.e. lightpaths, for user traffic by routing and wavelength assignment of optical channels carried in optical links of a Wavelength Switched Optical Network (WSON). Said method involves following blocks:

Block 510: Obtaining a set of Physical Impairment (PI) parameter values affecting the optical channels. At least one of said PI parameter values are obtained by measurement and distribution of said parameter value among network nodes connected to said Optical Paths in the Wavelength Switched Optical Network.

Said block 510 is performed in the first node 110 (see figure 4) by the Message Receiver 120 (see figure 4). Some of the PI parameter values are received in a specially adapted message 130 (see figure 4), e.g. a routing protocol such as OSPF, IS-IS, etc. The PI information is extracted (read/copied) and forwarded to the path computation block 113 (see figure 4), in which the PI values are used for path computation, see block 520. Additional necessary PI values, especially static PI values, may be requested and received from the TED 118 (see figure 4). Block 515 is then performed.

Block 515: Determining a feasibility verdict for each optical path candidate by performing path computation involving for each optical path its obtained PI parameter values.

In the following embodiment of the invention, Block 515 comprises two sub-blocks 520, 530.

Block 520: Calculating for each optical link a Quality of Transmission (QoT) parameter value by means of a set of PI parameter values.

Block 520 is performed by the path computation block 113 (see figure 4). The result of QoT calculation is used in the next block 530 for assessing feasibility verdicts. The feasibility verdicts may be determined by the PLDE 116 (see figure 4) and returned to the PCE 114 (see figure 4).

Block 530: Assessing feasibility verdicts for different Optical Paths across said Optical Network based on said calculated Quality of Transmission (QoT) Parameter values of optical links constituting each of said different Optical Path.

As will be described further down, the feasibility verdict is given for an evaluated Quality of Traffic (QoT) parameter. As an example, the feasibility verdict may be "yes" or "no" as the verdict is based on the question: "The lightpath under computation is physically feasible?": "yes" or "no".

The PCE 114 of the path computation block 113 sends the feasibility verdicts to the LER 112 (see figure 4) which performs the routing of the optical signals, see block 540.

Block 540: Routing optical signals via Optical Paths based upon said feasibility verdicts for different Optical Paths.

As already been pointed out above, the path computation may be distributed or centralized. If the path computation capability is positioned in a node of the network, the positioning is said to be distributed. A path computation functionality block (113 in figure 4) for performing block 515 is then positioned in said node, preferably an ingress node. If the path computation functionality block (113 in figure 4) is positioned in a central node, NMS, of the network, block 615 is performed there. In the centralized case, the node with path computation capability is configured to communicate the necessary PI values to the central node, and receive the result of the path computation, e.g. feasibility verdicts, for routing/switching purposes.

Thus, the above described aspect of the present invention is a network system method embodiment. It is obvious that said embodiment may be applied in a network and system comprising a plurality of nodes comprising different Network Elements, e.g. LERs, LSRs, OAs, OXCs, RROADMs, etc.

Another aspect of the present invention is a method performed in an ingress node having path computation capability. Further, one aspect of the present invention is a method performed in an intermediate node or egress node of the network. The method is performed in an ingress node having path computation capability.

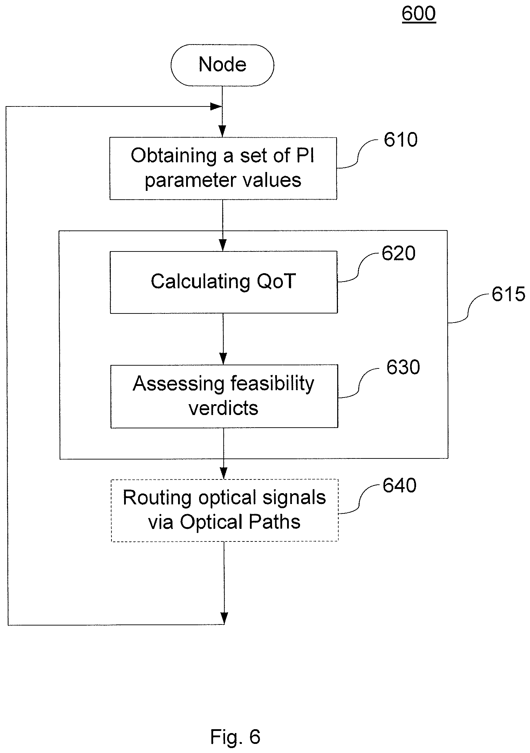

Figure 6 is a flowchart of an embodiment of a method according to the present invention performed in a node, e.g. an ingress node. The blocks of said method may be as follows:

Block 610: Obtaining a set of Physical Impairment (PI) parameter values affecting the optical channels.

At least one of said PI parameter values are obtained by measurement of and distribution of said parameter value among network nodes connected to said Optical Paths in the Wavelength Switched Optical Network. Said block 610 is performed by the Message Receiver 120 (see figure 4). Some of the PI parameter values are received in a specially adapted message 130 (see figure 4), e.g. a routing protocol such as OSPF, IS-IS, etc. The PI information is extracted (read/copied) and forwarded to the path computation block 113 (see figure 4), in which the PI values are used for path computation, see block 620. Additional necessary PI values may be requested and received from the TED 118 (see figure 4).

Block 615: Determining a feasibility verdict for each optical path candidate by performing path computation involving for each optical path its obtained PI parameter values.

In the following embodiment of the invention, Block 615 comprises two sub-blocks 620, 630.

Block 620: Calculating for each optical link a Quality of Transmission (QoT) parameter value by means of a set of PI parameter values.

Block 620 is performed by the path computation block 113 (see figure 4). The result of QoT calculation is used in the next block 630 for assessing feasibility verdicts. The feasibility verdicts may be determined by the PLDE 116 (see figure 4) and returned to the PCE 114 (see figure 4).

Block 630: Assessing feasibility verdicts for different Optical Paths across said Optical Network based on said calculated Quality of Transmission (QoT) Parameter values of optical links constituting each of said different Optical Path. As will be described further down, the feasibility verdict ("The lightpath under computation is physically feasible?": "yes" or "no") is given for an evaluated Quality of Traffic (QoT) parameter.

The PCE 114 of the path computation block 113 sends the feasibility verdicts to the LER 112 (see figure 4) which performs the routing of the optical signals, see block 640.

Block 640: Routing optical signals via Optical Paths based upon said feasibility verdicts for different Optical Paths.

As already been pointed out above, the path computation may be distributed or centralized. If the path computation capability is positioned in a routing node of the network, the positioning is said to be distributed. A path computation functionality block (113 in figure 4) for performing block 615 is then positioned in said node, preferably an ingress node. On the other hand, if the path computation functionality block (113 in figure 4) is positioned in a central node, NMS, of the network, block 615 is performed there. In the centralized case, the node with path computation capability is configured to communicate the necessary PI values to the central node, which performs the path computation and transmits the path computation result to the node with path computation capability. Said node receives the result of the path computation, e.g. feasibility verdicts, for performing the routing/switching. Thus, the path computation functionality block and routing/switching functionalities, e.g. LER/ROADM, may be positioned in different nodes.

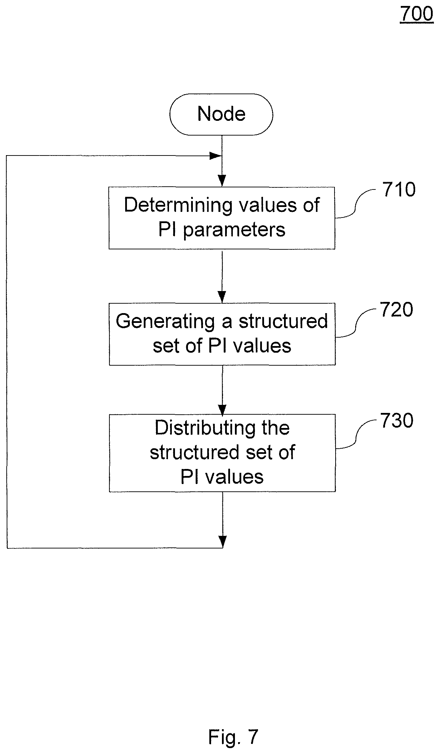

Figure 7 is a flowchart presenting embodiments of a method for distributing PI parameter values to nodes having path computing capability. According to the present invention, said embodiments may be performed in an intermediate node, a transition node or an egress node of the WSON. Such a node 122 is illustrated in figure 4. The blocks of said method may be as follows:

Block 710: Determining values of Physical Impairment (PI) parameters affecting the optical channels.

At least one of said PI parameter values is determined by measurement of the PI parameter related to the Optical Paths passing a node in the Wavelength Switched Optical Network. The determination of dynamic PI values is performed by the measurement function block 126.

Block 720: Generating a structured set of the PI parameter values.

The structured set is generated according to an object format for advertizing the set of physical impairment parameter values in a link state routing protocol. Said object format is a structured way of organizing and inserting the parameter values in a message protocol according to the invention. The object format is described in more details further down in this description.

Block 730: Distributing said structured set of PI parameters to a node having path computing capability.

Said structured set of PI parameters is addressed and sent to at least one ingress node of the network, said ingress node having path computing capability. Block 720 and block 730 are performed by a PI parameter set generating functional block 128 (see figure 4) in the node. Said functional block may be implemented as a programmable processor, e.g. digital microprocessor, Central Processing Unit (CPU), and a transmitter device.

## Object format of the message

According to the present invention, the set of PI parameters is transmitted in a structured set. Said structured set is preferably a message which may be a link state routing protocol, which is generated and transmitted from an intermediate node or a egress node to a node with path computing capacity.

In the following, an object format for advertizing the set of Physical Impairment (PI) in a link state routing protocol is specified. Said link state routing protocol is used for carrying the set of PI parameter values. Said information set is required for the feasibility assessment of the lightpath to be established across an optical switched network controlled by a WSON Control Plane when a dynamic wavelength provisioning is considered. The link state protocol may be a distributed routing protocol, such as e.g. an Intermediate System to Intermediate System (IS-IS) protocol or an Open Shortest Path First (OSPF) protocol.

According to embodiments of the invention, a distributed link state routing protocol based on OSPF with Generalized Multi-Protocol Label Switching (GMPLS) extensions may be used. Such a protocol is specified as an "Open Shortest Path First - Traffic Engineering" (OSPF-TE) protocol. It is configured to run on the data plane of the network. The information transported in the routing protocol shall provide all the parameters necessary to enable the PLDE to evaluate the QoT. Different vendors could specify and use different set of parameters to estimate the feasibility, e.g. the Bit Error Rate (BER).

The set of PI parameter values may contain static values that are stored in and retrievable from a database (TED). The set of Physical Impairment (PI) parameter values may be distributed according to Sparse Parameter distribution, or according to an Aggregated Parameter distribution. According to the aggregated parameter strategy, the physical description of the network is given using several sub-sets of homogenous elements: types of fibers, types of amplifiers, types of dispersion compensator, etc. The strategy assumes that the PCE/PLDE is aware of the parameters associated to each type of element. In the sparse parameters strategy, the physical description of the network is given using a complete encoding, or enumeration, of the PI parameters involved. Examples of sparse and aggregated parameter distribution will be illustrated in association with the description of amplifier parameters, further down in this description.

The path computation, e.g. of the QoT parameter, is computed taking into account:

- the parameters of the optical interfaces at the far ends of the path;
- the parameters of the network nodes involved in the propagation of the optical signal;
- the fiber spans (link components, as defined below) where the signal is carried.

Thus, the set of Physical Impairment (PI) parameter comprises parameters characterizing node optical interfaces such as transmitter and receiver parameters, parameters of the network nodes of an optical path involved in the propagation of an optical signal such as amplifier parameters, and parameters of link components involved in the propagation of an optical signal over an Optical Path. The information transported by the routing protocol shall provide all the parameters necessary to enable the PLDE to evaluate the QoT. Different vendors could use a different parameter to estimate the feasibility (i.e. the BER). The parameters, or characteristics, may be sorted into five groups, each group referring to a macro-area:

- Transmitter (related to the ingress node);
- Receiver (related to the egress node);
- Amplifier (related to all nodes);
- Fiber (related to link components);
- Dispersion Compensating Fibers (DCF) module (related to all nodes). Each group of photonic parameters will be presented in more detail and how they may be encoded, or enumerated, according to the present invention.

In the following example of the invention, a new OSPF-TE protocol is described. Each Traffic Engineering Link in a network could be described by the OSPF with a Traffic Engineering Link State Advertisement (TE LSA). The TE LSA is described in the document RFC 3630. The TE LSA is containing a Link Type Length Value (TLV), which is denoted TE Link LSA. The Link TLV, or TE Link LSA, is comprises a certain number of sub-objects, denoted sub-TLVs. Each of these sub-objects describes some of the characteristics of the TE Link. The sub-TLVs described in the following paragraphs are intended to be inserted in the TE LSA, in the TE Link.

In Example1 below, an example of the fields of an impairment specification sub TLV object is illustrated. The impairment specification sub TLV is located in the Link TLV of an OSPF-TE.

| Sub- Type (Imp.Specification) = TBD | Length = TBD |
|---|---|
| Payload/content field | |

Example 1. An impairment specification sub TLV object.

The length of an object can be "To Be Defined" (TBD) in basically two categories:

1) When an object is a flexible container of sub-objects;
2) When an object has a content that has to be syntactically specified.

An example of the first category is the sub-type impairment, sub-sub type transmitter, that has length TBD because the length must be evaluated dynamically. The length is equal is equal to the sum of the total length of the sub-objects it contains, i.e. the sum of all lengths + the space of the headers of the sub-objects contained. In this case, TBD for the length should be considered as "to be calculated dynamically".

Examples of the second category are shown in table 11. It could be said that the length is 8, i.e. 8 times 4 bytes = 32 bits, including the header. The interpretation of the field depends on the value. Possible values are:

a. Unsigned integer values ---> the content is interpreted as an unsigned integer of 32 bits (4 bytes);
b. Signed integer values ---> the content is interpreted by the protocol as an integer of 32 bits;
c. Real values ---> the content can be interpreted as floating point regarding to the IEEE 32 bit floating point representation (single precision floating point format).

The TE LSA groups together the five parameter groups mentioned above, wherein each parameter group, or group of characteristics, is encoded/enumerated as a sub-sub TLV type.

- Transmitter parameter sub-sub TLV type: 1;
- Receiver parameter sub-sub TLV type: 2;
- Amplifier parameter sub-sub TLV type: 3;
- Fiber parameter sub-sub TLV type: 4;
- Dispersion Compensating Fibers (DCF) module parameter sub-sub TLV type: 5

Fiber parameter (sub-sub TLV type: 4) may also be denoted Link Component Impairment, or LC Impairment.

In Example 2 is an example of a TLV tree structure in an OSPF-TE protocol with WSON Impairments illustrated.

| LSA age | | Options | 10 |
|---|---|---|---|
| 1 | Instance | | |
| Advertising Router | | | |
| LS Sequence Number | | | |
| LS Checksum | | LS Length | |
| Type (2) (Link) | | Length | |
| Sub Type = TBD (Impairment Specification) | | Length | |
| Sub-Sub Type = 1 (Transmitter) | | Length | |
| Transmitter Payload | | | |
| Sub-Sub Type = 2 (Receiver) | | Length | |
| Receiver Payload | | | |
| Sub-Sub Type = 3 (Amplifier) | | Length | |
| Amplifier Payload | | | |
| Sub-Sub Type = 4 (Fiber Parameter) | | Length | |
| Fiber Parameter Payload | | | |
| Sub-Sub Type = 5 (Disp. Comp.) | | Length | |
| Dispersion Compensating Payload | | | |

Example 2. TLV tree structure in an OSPF-TE protocol

It is worth to be noted that the physical impairments addressed in this document is a subset of all possible parameters. The choice of parameters is bounded to a particular PCE computation and therefore the OSPF could be further enriched with an additional set of parameters whenever it is needed by the usage of a different PCE.

**Parameters of the optical interfaces at the far ends of the path.**

The parameters characterizing the node optical interfaces are the transmitter and receiver parameters.

**Transmitter PI parameters**

The transmitter parameters are defined at the transmitter output reference points S or MPI-S as given in the ITU-T standardization documents G.957, G.691, G.692 and G.959.1. The parameters are listed in Table 1.

Table 1: Transmitter PI parameters.

| Parameter | Acronym | Unit |
|---|---|---|
| System operating wavelength range (G.959.1) | $[\lambda_{min},\lambda_{max}]$ | Nanometre [nm] |
| System central wavelength (G.959.1) | $\lambda_m$ | Nanometre [nm] |
| Channel Spacing (G.694.1) | $\Delta\lambda$ | Nanometre [nm] |
| Bit Rate (2.5 Gbps, 10 Gbps, 40 Gbps) | R | Gigabit per second [Gbps] |
| Extinction Ratio (G.959.1) | $E_g$ | |
| Duty Cycle | $D_C$ | |
| Relative Intensity Noise | RIN | Decibel/Hertz [dB/Hz] |
| Launch OSNR (at BA output) | $OSNR_{IN}$ | Decibel [dB] |

In the WSON model, the transmitter PI parameters are in general implicit in the traffic type specification: each traffic request is associated with an optical interface type, i.e. transponder/muxponder type. Each interface has its own set of transmission parameters. These parameters may be encoded as illustrated in table 2.

Table 2: Encoding of Transmitter PI parameters.

| Parameters of Sub-Sub Type=1 | Sub-Sub-Sub Type | Length |
|---|---|---|
| System operating wavelength range (G.959.1) | 1 | 8 |
| System central wavelength (G.959.1) | 2 | 8 |
| Channel Spacing (G.694.1) | 3 | 8 |
| Bit Rate (2.5 Gbps, 10 Gbps, 40 Gbps) | 4 | 8 |
| Extinction Ratio (G.959.1) | 5 | 8 |
| Duty Cycle | 6 | 8 |
| Relative Intensity Noise | 7 | 8 |
| Launch OSNR (at BA output) | 8 | 8 |

In Example 3 below, an example of an impairment specification sub TLV object is illustrated. The impairment specification sub TLV is located in the Link TLV of an OSPF-TE, wherein sub-sub TLV and sub-sub-sub TLV transmitter parameters are specified.

| Sub-Type (Impairment-Specification) = TBD | Length = TBD |
|---|---|
| Sub-Sub-Type = 1 (Transmitter) | Length = TBD |
| Sub-Sub-SubType = 1 (Wavelength Range) | Length = 8 |
| System Operating Wavelength Range | |
| Sub-Sub-SubType = 2 (Centr. Wavelen.) | Length = 8 |
| System Central Wavelength | |
| Sub-Sub-SubType = 3 (Ch. Spacing) | Length = 8 |
| Channel Spacing | |
| Sub-Sub-SubType = 4 (Bit Rate) | Length = 8 |

(continued)

| Bit Rate | |
|---|---|
| Sub-Sub-SubType = 5 (Ext. Ratio) | Length = 8 |
| Extintion Ratio | |
| Sub-Sub-SubType = 6 (Duty Cycle) | Length = 8 |
| Duty Cycle | |
| Sub-Sub-SubType = 7 (Rel. Int. Noise) | Length = 8 |
| Relative Intensity Noise | |
| Sub-Sub-SubType = 8 (Launch OSNR) | Length = 8 |
| Launch OSNR | |

Example 3: OSPF-TE with sub-sub TV and sub-sub-sub TV transmitter parameters.

**Receiver parameters**

The receiver parameters are defined at the receiver reference points R or MPI-R as given in the ITU-T standardization documents G.957, G.691, G.692 and G.959.1. The parameters are listed in Table 3.

Table 3: Receiver Parameters

| Parameter | Acronym | Unit |
|---|---|---|
| Sensitivity (G.959.1) | S | decibelmeter [dBm] |
| Overload (G.959.1) | $O_L$ | decibelmeter [dBm] |
| Transimpedance | $T_R$ | Ohm [$\Omega$] |
| Electrical Bandwidth | $B_E$ | Gigahertz [GHz] |
| Optical Bandwidth | $B_O$ | Gigahertz [GHz] |
| Forward Error Correction (FEC) Gain (on Q factor) | $G_{FEC}$ | Decibel [dB] |

These receiver parameters may be encoded as illustrated in table 4.

Table 4: Receiver Parameters

| Parameters of Sub-Sub Type = 2 | Sub-Sub-Sub Type | Length |
|---|---|---|
| Sensitivity (G.959.1) | 1 | 8 |
| Overload (G.959.1) | 2 | 8 |
| Transimpedance | 3 | 8 |
| Electrical Bandwidth | 4 | 8 |
| Optical Bandwidth | 5 | 8 |
| Forward Error Correction (FEC) Gain (on Q factor) | 6 | 8 |

In Example 4 below, an example of an impairment specification sub TLV object is illustrated. The impairment specification sub TLV is located in the Link TLV of an OSPF-TE, wherein sub-sub TLV and sub-sub-sub TLV receiver parameters are specified.

| Sub-Type (Impairment-Specification) = TBD | Length = TBD |
|---|---|
| Sub-Sub-Type = 2 (Receiver) | Length = TBD |

(continued)

| Sub-Sub-SubType = 1 (Sensitivity) | Length = 8 |
|---|---|
| Sensitivity | |
| Sub-Sub-SubType = 2 (Transimpedance) | Length = 8 |
| Transimpedance | |
| Sub-Sub-SubType = 3 (Electrical Bandwidth) | Length = 8 |
| Electrical Bandwidth | |
| Sub-Sub-SubType = 4 (Optical Bandwidth) | Length = 8 |
| Optical Bandwidth | |
| Sub-Sub-SubType = 5 (FEC Gain) | Length = 8 |
| FEC Gain | |

Example 4: OSPF-TE with sub-sub TLV and sub-sub-sub TLV receiver parameters.

**Parameters of the network nodes involved in the propagation of the optical signal.**

The parameters characterizing the transit nodes are mainly the amplifier parameters.

**Amplifier Parameters**

Types of optical amplifiers and the relevant specifications as well as implementation related aspects of optical fiber amplifiers and semiconductor amplifiers are given in ITU-T documents G.661, G.662 as well as G.663 respectively. Line amplifier definitions of long haul DWDM systems are given in G.692.

Amplifiers can be used in conjunction with optical receivers and/or transmitter black box and covered by the related specification. It should be noted that receiver side penalties, e.g. jitter penalty, are influenced by the presence of optical amplification.

An exhaustive list of generic amplifier parameters is defined in ITU-T document G.661. In practical system design only a part of said listed set of parameters is of relevance. Relevant parameters are listed in Table 5.

Table 5: Relevant Amplifier Parameters

| Parameter | Acronym | Unit |
|---|---|---|
| Multichannel Gain Variation | GV | Decibel [dB] |
| Multichannel Gain Tilt | GT | dB |
| Total Received Power | $P_{RX}$ | dBm |
| Total Launched Power | $P_{TX}$ | dBm |
| Noise Figure | NF | dB |
| Polarization Mode Dispersion | $PMD_{OA}$ | Picoseconds [ps] |
| Polarization Dependent Loss | $PLD_{OA}$ | dB |

These amplifier parameters may be encoded as illustrated in table 4.

Table 6: Relevant Amplifier Parameters

| Parameters of Sub-Sub Type = 3 | Sub-Sub-Sub Type | Length |
|---|---|---|
| Multichannel Gain Variation | 2 | 8 |
| Multichannel Gain Tilt | 3 | 8 |
| Total Received Power | 4 | 8 |

(continued)

| Parameters of Sub-Sub Type = 3 | Sub-Sub-Sub Type | Length |
|---|---|---|
| Total Launched Power | 5 | 8 |
| Noise Figure | 6 | 8 |
| Polarization Mode Dispersion | 7 | 8 |
| Polarization Dependent Loss | 8 | 8 |

In Example 5 below, an example of an impairment specification sub TLV object is illustrated. The impairment specification sub TLV is located in the Link TLV of an OSPF-TE, wherein sub-sub TLV and sub-sub-sub TLV amplifier parameters are specified.

| Sub-Type (Impairment-Specification) = TBD | Length = TBD |
|---|---|
| Sub-Sub-Type = 3 (Amplifier) | Length = TBD |
| Sub-Sub-SubType = 2 (Multich Gain Var) | Length = 8 |
| Multichannel Gain Variation | |
| Sub-Sub-SubType = 3 (Multich. Gain Tilt) | Length = 8 |
| Multichannel Gain Tilt | |
| Sub-Sub-SubType = 4 (Tot. Rec. Power) | Length = 8 |
| Total Received Power | |
| Sub-Sub-SubType = 5 (Tot. Launch. Power) | Length = 8 |
| Total Launched Power | |
| Sub-Sub-SubType = 6 (Noise Figure) | Length = 8 |
| Noise Figure | |
| Sub-Sub-SubType = 7 (PMD) | Length = 8 |
| PMD | |
| Sub-Sub-SubType = 8 (PDL) | Length = 8 |
| PDL | |

Example 5: OSPF-TE with sub-sub TLV and sub-sub-sub TLV amplifier parameters.

**Amplifier sub-sub-TLV with aggregated parameters**

In this strategy, the physical description of the network is given using several sub-sets of homogenous elements: types of amplifier, types of fibers, types of dispersion compensator and so on-
[0083]   The strategy assumes that the PCE/PLDE is aware of the parameters associated to each type of element. For example, with reference to a network based on MHL3000, the following set of amplifier names could be used, as listed in table 7.

Table 7: Listing of Amplifier set names

| |
|---|
| **MH_EDFA_DSA_22/20** |
| **MH_EDFA_DSA_29/20** |
| **MH_EDFA_SSA_22/20** |
| **MH_EDFA_SSA_29/20** |
| **MH_EDFA_DSA_22/18** |

(continued)

| MH_EDFA_SSA_22/18 |
| --- |

In this case is sufficient to distribute, in the routing protocol, a string containing the amplifier type because the PLDE is aware of the parameters associated to the type itself. These amplifier set names may be encoded as illustrated in table 8.

Table 8: Amplifier parameters.

| Parameters of Sub-Sub Type = 3 | Sub-Sub-Sub Type | Length |
| --- | --- | --- |
| Amplifier Set Name | 1 | 8 |

In Example 6 below, an example of an impairment specification sub TLV object is illustrated. The impairment specification sub TLV is located in the Link TLV of an OSPF-TE, wherein sub-sub TLV and sub-sub-sub TLV amplifier set names are specified.

| Sub Type (Impairment-Specification) = TBD | Length = TBD |
| --- | --- |
| Sub-Sub Type = 3 (Amplifier) | Length = TBD |
| Sub-Sub-Sub Type = 1 (Amplifier Set) | Length = 8 |
| Amplifier Set Name | |

Example 6: OSPF-TE with sub-sub TLV and sub-sub-sub TLV amplifier set name.

**Fiber span and Fiber span parameters**

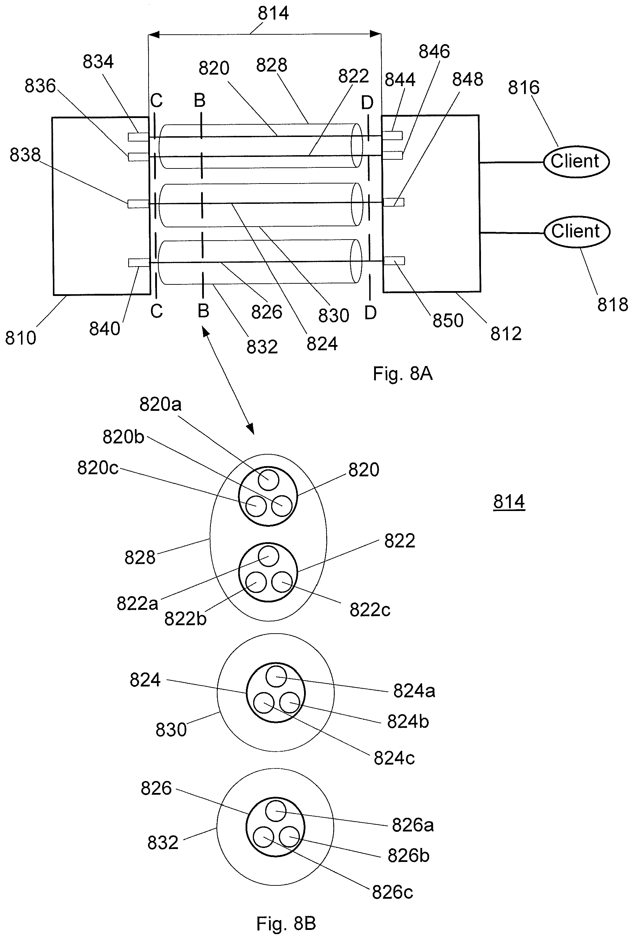

Figures 8A and 8B give a visual scheme, exploiting the cable paradigm, of GMPLS model elements.

Figure 8A is a block diagram illustrating an example of a fiber span between two adjacent Network Elements NEs, e.g. photonic equipment, in an optical transmission network.

Figure 8B is a cross-section B-B of the illustrated fiber span in Figure 8A.

In figure 8A, two Network Elements 810, 812 are optically connected via a fiber span 814. The two NEs are situated in separate nodes of the network. In the illustrated example, two clients 816, 818 are connected to the NE 812. The NEs 810, 812 are photonic equipments, e.g. routers of the kind MHL3000 comprising a WSON agent. A cross-section A-A through the fiber span 814 is indicated by a hatched line. In the illustrated example, the fiber span comprises four optical cables 820, 822, 824, 826, which are provided for carrying and transferring the data communication in both directions between the two NEs 810, 812. Each optical cable comprises a number of optical fibers, in this example three fibers as illustrated in figure 8B. Each optical fibre is connected to a NE port of a NE. The first NE 810 comprises ports 834, 836, 838, 840 and NE 812 comprises ports 844, 846, 848, 850. As illustrated in figures 8a and 8B, port 834 in NE 810 is connected via the optical fibers 820a, 820b, 820c in cable 820 to port 844 in NE 812. Further, port 836 in NE 810 is connected via the optical fibers 822a, 822b, 822c in cable 822 to port 846 in NE 812. Port 838 in NE 10 is connected via the optical fibers 824a, 824b, 824c of cable 824 to port 848 in NE 812. Port 840 in NE 810 is connected via the optical fibers 826a, 826b, 826c to port 850 in NE 812.

The NE ports that share common characteristics can be bundled to form a Traffic Engineered link, TE link, even denoted Link Cluster, LK. One TE link is seen as a bundle of ports/fibers and its capacity in terms of available channels is the union of the available channels associated to the single ports. As illustrated in figure 8A, cable 820 and 822 comprising optical fibers 820a-c and 822a-c, and their associated ports form a TE Link 828. Cable 824 with fibers 824a-c forms a TE Link 830, and cable 826 with fibers 826a-c form a TE Link 832.

The interface C-C between the NE 10 and the fiber span 14 is indicated as a hatched line. Further, the interface D-D between the NE 12 and the fiber span 14 is indicated as a hatched line.

Each physical port in the NE represents a Link Component LC that is associated to a given TE link. In the illustrated example, Link Component port 834 and Link Component port 836 of NE 810 in the interface C-C form a TE Link, Link Component port 838 of NE 810 in the interface C-C forms a TE Link and Link Component port 840 of NE 810 in the interface C-C forms a TE Link. Further, Link Component port 844 and Link Component port 846 of NE 812 in the interface D-D form a TE Link, Link Component port 848 of NE 812 in the interface D-D forms a TE Link and Link Component port 850 of NE 812 in the interface D-D forms a TE Link.

Each TE link in the network is described by the OSPF with a TE Link State Advertisement LSA containing an object denoted Link Type Length Value TLV.

This object is named TE link LSA and comprises a certain number of sub-objects denoted sub-TLVs. The TE LSA is described in RFC 3630. Each of these sub-objects describes some of the characteristics of the cluster.

**Fiber parameters**

Transmission related aspects of optical fiber transmission systems are:

- Fiber Attenuation;

- Chromatic Dispersion

- Optical Fiber non-linearities:

  ◦ Stimulated Raman Scattering (SRS)

  ◦ Four Wave Mixing (FWR)

  ◦ Self Phase Modulation (SPM)

  ◦ Cross Phase Modulation (XPM)

  ◦ Stimulated Brillouind Scattering (SBS)

- Polarisation properties:

  ◦ Polarization Mode Dispersion (PMD)

  ◦ Polarization Dependent Loss (PDL)

Other path aspects shall also be considered:

- Splices attenuation;

- Connectors attenuation;

- Optical attenuators (if used);

- Other passive optical devices (if used);

- Span Margin (fiber cable performance variations due to environmental factors; and degradation of any connectors).

Table 9 lists the parameters that are involved in the calculation of penalties related to the physical impairments of the fibre. It should be noted that some of the penalties are dependent by the number of channels, i.e. wavelengths, in the fiber span.

Table 9: Fiber Parameters and typical values

| Parameter | Typical values | Acronym | Unit |
|---|---|---|---|
| Length of Span | 100 | $L_{Si}$ | Kilometres [km] |
| Attenuation Coefficient | 0.28 to 0.5 | $\alpha$ | Decibel/kilometres [dB/km] |
| Chromatic Dispersion | 17.0 | D | ps/(nm·km) |
| Dispersion Slope | 0.056 | S | ps/(nm$^2$·km) |
| Dispersion Uncertainty | 0.1 | $\delta$ | ps/(nm·km) |

(continued)

| Parameter | Typical values | Acronym | Unit |
|---|---|---|---|
| Slope Uncertainty | 0.001 | $\sigma$ | ps/(nm$^2$·km) |
| PMD coefficient | < 0.5 | PMD | ps/km$^{0,5}$ |
| Effective Area | 100 | $A_E$ | Square Micrometre [$\mu$m$^2$] |
| Non Linear Refractive Index (def. 2.6 ·10$^{-8}$) | 1.48 | $n_2$ | [$\mu$m$^2$/W] (W=Watt) |
| Raman Coefficient (def. 5·10$^{-14}$) | .35 to 6.0 | $g_R$ | m/W |
| Connector Attenuation | 0.5 | $A_C$ | dB |
| Splice Attenuation | 1 | $\alpha_S$ | dB |
| Span Margin | 2 | SM | dB |

## Dispersion Compensator parameters

Dispersion Compensating Fibers DCF are the most mature and used devices for dispersion compensation. They are optical fibers providing a large negative dispersion coefficient.

DCF modules, from a system perspective, are characterized by the parameter resumed in Table 10. A typical assumption is to ignore the CD penalty considering that the DCF modules well compensate this impairment. Under this assumption these parameters could be not considered for OSPF dissemination.

Table 10: Dispersion Compensator Parameters.

| Parameter | Acronym | Unit |
|---|---|---|
| Chromatic Dispersion | $D_{DCM}$ | ps/nm·Km |
| Dispersion Slope | $S_{DCM}$ | ps/nm$^2$ |
| Dispersion Tolerance | $\delta_{DCM}$ | ps/nm |
| Slope Tolerance | $\sigma_{DCM}$ | ps/nm$^2$ |
| Polarization Mode Dispersion | $PMD_{DCM}$ | ps |
| Polarization Dependent Loss | $PLD_{DCM}$ | dB |

## LC - Impairment Sub-Sub-TLV

The first parameter associated with a link component LC is a local identifier that can univocally identify it: Link Component ID, even denoted LC number. These link parameters may be encoded as illustrated in table 11.

Table 11: Relevant Fiber Parameters

| Parameters of Sub-Sub Type = 4 | Sub-Sub-Sub Type | length |
|---|---|---|
| LC number | 1 or 2 or 3 | 8 |
| Length of Span | 4 | TBD |
| Attenuation Coefficient | 5 | TBD |
| Chromatic Dispersion | 6 | TBD |
| Dispersion Slope | 7 | TBD |
| Dispersion Uncertainty | 8 | TBD |
| Slope Uncertainty | 9 | TBD |
| PMD coefficient | 10 | TBD |
| Effective Area | 11 | TBD |

(continued)

| Parameters of Sub-Sub Type = 4 | Sub-Sub-Sub Type | length |
|---|---|---|
| Non Linear Refractive Index (def. $2.6 \cdot 10^{-8}$) | 12 | TBD |
| Raman Coefficient (def. $5 \cdot 10^{-14}$) | 13 | TBD |
| Connector Attenuation | 14 | TBD |
| Splice Attenuation | 15 | TBD |
| Span Margin | 16 | TBD |

The *"LC number"* sub-sub-sub-TLV type values can be freely assigned since these objects can be found only inside the *"LC-impairment"* sub-sub-TLV. Examples of possible values are according to table 12:

Table 12: Relevant Fiber Parameters

| LC number sub-sub-sub TLV Type | Object | Length in bytes |
|---|---|---|
| 1 | Unnumbered LC ID | 4 |
| 2 | IPv4 LC ID | 4 |
| 3 | IPv6 LC ID | 16 |

In an appendix to this description, see Appendix, is an example of an Impairment-Specification sub-TLV with several LC-impairment sub-sub-TLV illustrated in example 7.

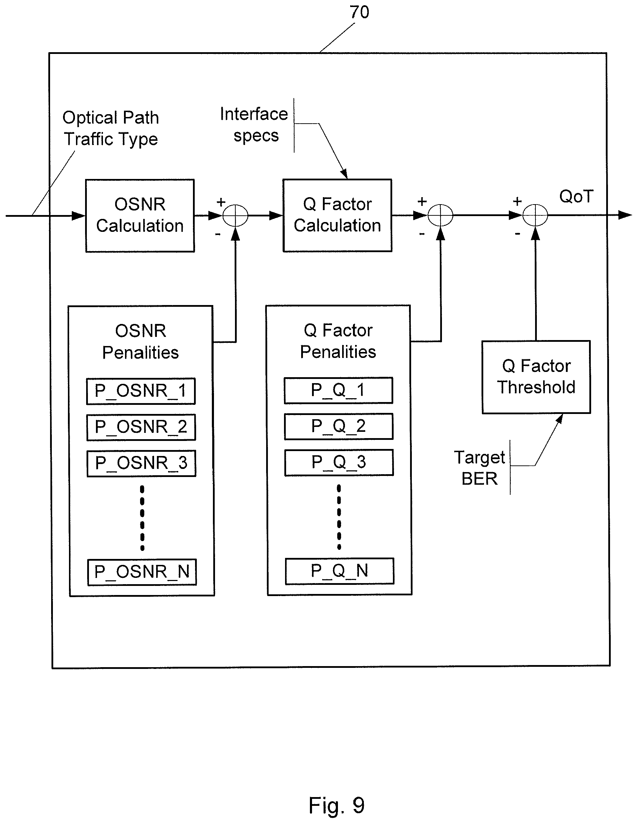

Figure 9 is illustrating an example of a Photonic Link Design Engine (PLDE) 70. The PLDE tool provides a validation service to the PCE. The overall validation process is resumed and described in the following.

The optical signal-to-noise ratio (OSNR) is defined as the ratio between the received power and the noise (ASE) power. The amplifier noise is commonly specified by the easily measurable parameter known as the noise figure. Starting from transmitter parameters, receiver parameters and amplifiers parameters it's possible to calculate the gross OSNR for a given path.

In a first approximation, the OSNR is calculated in "ideal" condition: ignoring a series of impairments that are subtracted as penalties from the OSNR. Penalties usually allocated on OSNR are FWM and PDL/PDG. Note that FWM penalty is negligible in the most common fibers (like G.652 and G.655 LEAF). The net OSNR is the OSNR obtained subtracting the relevant penalties from the gross OSNR. The net OSNR is used to calculate the Q-factor.

The Q-factor refers to the receiver terminal, that is: given the link, we can define and calculate the Q-factor of the received signal. The higher Q-factor, the better the quality of the optical signal. Calculation of the gross Q-factor is strictly related to the receiver specs and parameters and starts from the net OSNR.

In general, propagation effects that do not affect the received OSNR but impacts the quality of the received eye-diagram, and so bit error rate (BER), are assigned to the Q factor: system penalties, CD penalty, XPM, PMD and so on. A net Q-factor is obtained.

The net Q is finally increased adding the FEC Gain and compared with a threshold. The QTHR threshold is defined as the Q required for meeting a post forward error correction BER of 10-15 according to the following formula:

$$BER \cong \frac{1}{Q_{THR} \cdot \sqrt{2 \cdot \pi}} \cdot e^{-\frac{Q_{THR}^2}{2}}$$

The expected QTHR threshold is subtracted from the net Q to obtain the Quality of Transmission (QoT) parameter:

$$QoT = Q(OSNR - \Sigma\ OSNR_{PEN}) - \Sigma\ Q_{PEN} + FEC_{GAIN} - Q_{THR}$$

The requirement for the PCE is to route a wavelength across the optical network obtaining a positive QoT at the receiver (otherwise a expensive OEO conversion will be necessary along the path to turn the wavelength to feasibility). Note that the set of penalties allocated to OSNR and/or on Q-factor can vary according to network characteristics, bit rate, channel number. For example, in 40G, with the introduction of new modulation formats (DPSK, RZ-DQPSK), the most of penalties are expressed as OSNR penalties instead of Q-factor penalties.

The entities, devices, means and blocks of the invention may be implemented in digital electronically circuitry, or in computer hardware, firmware, software, or in combinations of them. Apparatus of the invention may be implemented in a computer program product tangibly embodied in a machine readable storage device for execution by a programmable processor; and method steps of the invention may be performed by a programmable processor executing a program of instructions to perform functions of the invention by operating on input data and generating output.

The invention may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language or in assembly or machine language if desired; and in any case, the language may be a compiled or interpreted language.

Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such internal hard disks and removable disks; magneto-optical disks; and CD-ROM disks. Any of the foregoing may be supplemented by, or incorporated in, specially -designed ASICs (Application Specific Integrated Circuits).

A number of embodiments of the present invention have been described. It will be understood that various modifications may be made without departing from the scope of the invention. Therefore, other implementations are within the scope of the following claims defining the invention.

Appendix: Example 7- LC-Impairment in a OSPF - TE protocol

| Sub-Type (Impairment-Specification) = TBD | Length = TBD |
|---|---|
| Sub-Sub Type = 4 (LC - Impairment) | Length = TBD |
| Sub-Sub-Sub Type = 1 (LC number) | Length = 8 |
| Link Component | |
| Sub-Sub-Sub Type = 4 (Length of Span) | Length = TBD |
| Length of Span value | |
| Sub-Sub-Sub Type = 5 (Attenuation Coeff.) | Length = TBD |
| Attenuation Coefficient value | |
| Sub-Sub-Sub Type = 6 (Chromatic Disp.) | Length = TBD |
| Chromatic Dispersion value | |
| Sub-Sub-Sub Type = 7 (Disp. Slope) | Length = TBD |
| Dispersion Slope value | |
| Sub-Sub-Sub Type = 8 (Disp. Uncertainity) | Length = TBD |
| Dispersion Uncertainty value | |
| Sub-Sub-Sub Type = 9 (Slope Uncertainty) | Length = TBD |
| Slope Uncertainty value | |
| Sub-Sub-Sub Type = 10 (PMD Coefficient) | Length = TBD |
| PMD Coefficient value | |
| Sub-Sub-Sub Type = 11 (Effective Area) | Length = TBD |
| Effective Area value | |
| Sub-Sub-Sub Type = 12 (Non Lin. Refr. A.) | Length = TBD |
| Non Linear Refractive Area value | |
| Sub-Sub-Sub Type = 13 (Raman Coefficient) | Length = TBD |
| Raman Coefficient value | |

(continued)

| Sub-Sub-Sub Type = 14 (Connector Att.) | Length = TBD |
|---|---|
| Connector Attenuation value | |
| Sub-Sub-Sub Type = 15 (Splice Att.) | Length = TBD |
| Splice Attenuation value | |
| Sub-Sub-Sub Type = 16 (Span Margin) | Length = TBD |
| Span Margin value | |

## Claims

1. A method for an optical network of establishing Optical Paths for user traffic by routing and wavelength assignment of optical channels carried in optical links of a Wavelength Switched Optical Network (100), the method comprising:

    - obtaining (510) a structured set of Physical Impairment, PI, parameter values affecting the optical channels, wherein at least one PI parameter value of said PI parameter values is/are obtained by measurement and distribution of said at least one PI parameter value among network nodes connected to the Optical Paths in the Wavelength Switched Optical Network (100);
    - determining (515) a feasibility verdict for each optical path by performing path computation involving, for each optical path, the obtained structured set of PI parameter values, wherein the determining (515) of the feasibility verdicts comprises:

        - calculating (520), for each optical link, a Quality of Transmission, QoT, parameter value by means of the obtained structured set of PI parameter values; and
        - assessing (530) said feasibility verdicts for different Optical Paths across the Wavelength Switched Optical Network (100) based on said calculated QoT parameter values of the optical links constituting each of said different Optical Paths;

    wherein the method further comprises:

        - routing (540) optical signals via the Optical Paths based upon said determined feasibility verdicts for said different Optical Paths.

2. The method according to claim 1, wherein a set of PI parameters is structured to comprise:

    - parameters characterizing node optical interfaces such as transmitter parameters and receiver parameters; and/or
    - parameters of the network nodes of an optical path involved in propagation of an optical signal such as amplifier parameters; and/or
    - parameters of link components involved in the propagation of an optical signal over an optical path.

3. A node entity (110) for establishing Optical Paths for user traffic by routing and wavelength assignment of optical channels carried in optical links of a Wavelength Switched Optical Network (100), where the node entity comprises receiving means (120) configured to obtain a structured set of Physical Impairment, PI, parameter values affecting the optical channels, wherein at least one PI parameter value of said PI parameter values are obtained by measurement and distribution of said at least one PI parameter value among network nodes connected to said Optical Paths in the Wavelength Switched Optical Network (100), the node entity (110) further comprising path computation capability (113) configured to determine a feasibility verdict for each optical path by performing path computation involving, for each optical path, said obtained structured set of PI parameter values, the path computation capability (113) comprising a Path Computation Element (114) configured to calculate for, each optical link a Quality of Transmission, QoT, parameter value by means of said obtained structured set of PI parameter values and assess said feasibility verdicts for different Optical Paths across the Wavelength Switched Optical Network (100) based on said calculated QoT parameter values of the optical links constituting each of said different Optical Paths, the node entity (110) further comprising a routing means (4, 6) configured to route optical signals via the Optical Paths based upon said determined feasibility verdicts for said different Optical Paths.

4. The node entity (110) according to claim 3, wherein a set of PI parameters is structured to comprise:

- parameters characterizing node optical interfaces such as transmitter parameters and receiver parameters; and/or
- parameters of the network nodes of an optical path involved in propagation of an optical signal such as amplifier parameters; and/or
- parameters of link components involved in the propagation of an optical signal over an optical path.

**Patentansprüche**

1. Verfahren für ein optisches Netzwerk zum Herstellen optischer Pfade für Benutzerverkehr durch Routing und Wellenlängenzuweisung von optischen Kanälen, die in optischen Verbindungen eines wellenlängengeschalteten optischen Netzwerks (100) getragen werden, wobei das Verfahren Folgendes umfasst:

- Erhalten (510) eines strukturierten Satzes von Parameterwerten zur physikalischen Beeinträchtigung (Physical Impairment - PI), die sich auf die optischen Kanäle auswirken, wobei mindestens ein PI-Parameterwert der PI-Parameterwerte durch eine Messung und Verteilung des mindestens einen PI-Parameterwerts unter den Netzwerkknoten erhalten wird, die mit den optischen Pfaden im wellenlängengeschalteten optischen Netzwerk (100) verbunden sind;
- Bestimmen (515) eines Durchführbarkeitsurteils für jeden optischen Pfad durch das Durchführen einer Pfadberechnung, die für jeden optischen Pfad den erhaltenen strukturierten Satz von PI-Parameterwerten beinhaltet, wobei das Bestimmen (515) der Durchführbarkeitsurteile Folgendes umfasst:

- Berechnen (520) eines Parameterwerts für jede optische Verbindung zur Übertragungsqualität (Quality of Transmission - QoT) mithilfe des erhaltenen strukturierten Satzes von PI-Parameterwerten; und
- Bewerten (530) der Durchführbarkeitsurteile für die unterschiedlichen optischen Pfade über das wellenlängengeschaltete optische Netzwerk (100) auf Grundlage der berechneten QoT-Parameterwerte der optischen Verbindungen, die jeden der optischen Pfade bilden;

- wobei das Verfahren ferner Folgendes umfasst:

- Routen (540) der optischen Signale über die optischen Pfade auf Grundlage der bestimmten Durchführbarkeitsurteile für die unterschiedlichen optischen Pfade.

2. Verfahren nach Anspruch 1, wobei ein Satz von PI-Parametern so strukturiert ist, dass er Folgendes umfasst:

- Parameter zum Charakterisieren der optischen Schnittstellen von Knoten, wie Sendeparameter und Empfangsparameter; und/oder
- Parameter der Netzwerkknoten eines optischen Pfads, der an der Ausbreitung eines optischen Signals, wie Verstärkerparameter, beteiligt ist; und/oder
- Parameter von Verbindungsteilen, die an der Ausbreitung eines optischen Signals über einen optischen Pfad beteiligt sind.

3. Knotenentität (110) zum Herstellen optischer Pfade für Benutzerverkehr durch Routing und Wellenlängenzuweisung von optischen Kanälen, die in optischen Verbindungen eines wellenlängengeschalteten optischen Netzwerks (100) getragen werden, in dem die Knotenentität Empfangsmittel (120) umfasst, die dazu konfiguriert sind, einen strukturierten Satz von Parameterwerten zur physikalischen Beeinträchtigung (Physical Impairment - PI), die sich auf die optischen Kanäle auswirken, zu erhalten, wobei mindestens ein PI-Parameterwert der PI-Parameterwerte durch eine Messung und Verteilung des mindestens einen PI-Parameterwerts unter den Netzwerkknoten erhalten wird, die mit den optischen Pfaden im wellenlängengeschalteten optischen Netzwerk (100) verbunden sind, wobei die Knotenentität (110) ferner Folgendes umfasst: eine Fähigkeit zur Pfadberechnung (113), die dazu konfiguriert ist, ein Durchführbarkeitsurteil für jeden optischen Pfad durch das Ausführen einer Pfadberechnung zu bestimmen, die für jeden optischen Pfad den erhaltenen strukturierten Satz von PI-Parameterwerten beinhaltet, wobei die Fähigkeit zur Pfadberechnung (113) ein Element zur Pfadberechnung (114) umfasst, das dazu konfiguriert ist, für jede optische Verbindung einen Parameterwert zur Übertragungsqualität mithilfe des erhaltenen strukturierten Satzes von PI-Parameterwerten zu berechnen und die Durchführbarkeitsurteile für verschiedene optische Pfade über das wellenlängengeschaltete optische Netzwerk (100) auf Grundlage der berechneten QoT-Parameterwerte der optischen Verbindungen, die jeden der unterschiedlichen optischen Pfade bilden, zu bewerten, wobei die Knotenentität (110) ferner ein Routingmittel (4, 6) umfasst, das dazu konfiguriert ist, optische Signale über die optischen Pfade auf Grundlage der bestimmten Durchführbarkeitsurteile für die unterschiedlichen optischen Pfade zu routen.

4. Knotenentität (110) nach Anspruch 3, wobei ein Satz von PI-Parametern so strukturiert ist, dass er Folgendes umfasst:

- Parameter zum Charakterisieren der optischen Schnittstellen der Knoten, wie Sendeparameter und Empfangsparameter; und/oder
- Parameter der Netzwerkknoten eines optischen Pfads, der an der Ausbreitung des optischen Signals beteiligt ist, wie Verstärkerparameter; und/oder
- Parameter der Verbindungsteile, die an der Ausbreitung eines optischen Signals über einen optischen Pfad beteiligt sind.

**Revendications**

1. Procédé pour un réseau optique d'établissement de trajets optiques pour un trafic utilisateur par acheminement et attribution de longueurs d'onde de canaux optiques portées dans des liaisons optique dans un réseau optique à commutation de longueurs d'onde (100), le procédé comprenant :

- l'obtention (510) d'un ensemble structuré de valeurs de paramètre de dégradation physique, PI, affectant les canaux optiques, dans lequel au moins une valeur de paramètre de PI desdites valeurs de paramètre de PI est/sont obtenue(s) par mesure et répartition de ladite au moins une valeur de paramètre de PI parmi des noeuds de réseau connectés aux trajets optiques dans le réseau optique à commutation de longueurs d'onde (100) ;
- la détermination (515) d'un verdict de faisabilité pour chaque trajet optique en effectuant un calcul de trajet impliquant, pour chaque trajet optique, l'ensemble structuré obtenu de valeurs de paramètre de PI, dans lequel la détermination (515) des verdicts de faisabilité comprend :

- le calcul (520), pour chaque liaison optique, d'une valeur de paramètre de qualité de transmission, QoT, au moyen de l'ensemble structuré obtenu de valeurs de paramètre de PI ; et
- l'évaluation (530) desdits verdicts de faisabilité pour différents trajets optiques sur le réseau optique à commutation de longueurs d'onde (100) sur la base desdites valeurs de paramètre de QoT calculées des liaisons optiques constituant chacun desdits différents trajets optiques ;

dans lequel le procédé comprend en outre :

- l'acheminement (540) de signaux optiques via les trajets optiques sur la base desdits verdicts de faisabilité déterminés pour lesdits différents trajets optiques.

2. Procédé selon la revendication 1, dans lequel un ensemble de paramètres de PI est structuré pour comprendre :

- des paramètres caractérisant des interfaces optiques de noeud tels que des paramètres d'émetteur et des paramètres de récepteur ; et/ou
- des paramètres des noeuds de réseau d'un trajet optique impliqués dans une propagation d'un signal optique tels que des paramètres d'amplificateur ; et/ou
- des paramètres de composantes de liaison impliqués dans la propagation d'un signal optique sur un trajet optique.

3. Entité de noeud (110) pour établir des trajets optiques pour un trafic utilisateur par acheminement et attribution de longueurs d'onde de canaux optiques portées dans des liaisons optiques d'un réseau optique à commutation de longueurs d'onde (100), où l'entité de noeud comprend des moyens de réception (120) configurés pour obtenir un ensemble structuré de valeurs de paramètre de dégradation physique, PI, affectant les canaux optiques, dans laquelle au moins une valeur de paramètre de PI desdites valeurs de paramètre de PI est obtenue par mesure et répartition de ladite au moins une valeur de paramètre de PI parmi des noeuds de réseau connectés auxdits trajets optiques dans le réseau optique à commutation de longueurs d'onde (100), l'entité de noeud (110) comprenant en outre une capacité de calcul de trajet (113) configurée pour déterminer un verdict de faisabilité pour chaque trajet optique en effectuant un calcul de trajet impliquant, pour chaque trajet optique, ledit ensemble structuré obtenu de valeurs de paramètre de PI, la capacité de calcul de trajet (113) comprenant un élément de calcul de trajet (114) configuré pour calculer pour chaque liaison optique une valeur de paramètre de qualité de transmission, QoT, au moyen dudit ensemble structuré obtenu de valeurs de paramètre de PI et évaluer lesdits verdicts de faisabilité pour différents trajets optiques sur le réseau optique à commutation de longueurs d'onde (100) sur la bases desdites valeurs de paramètre de QoT calculées des liaisons optiques constituant chacun desdits différents trajets optiques, l'entité de noeud (110) comprenant en outre des moyens d'acheminement (4, 6) configurés pour acheminer des signaux optiques via les trajets optiques sur la base desdits verdicts de faisabilité déterminés pour lesdits différents trajets optiques.

4. Entité de noeud (110) selon la revendication 3, dans laquelle un ensemble de paramètres de PI est structuré pour comprendre :

- des paramètres caractérisant des interfaces optiques de noeud tels que des paramètres d'émetteur et des paramètres de récepteur ; et/ou
- des paramètres des noeuds de réseau d'un trajet optique impliqués dans une propagation d'un signal optique tels que des paramètres d'amplificateur ; et/ou
- des paramètres de composantes de liaison impliqués dans la propagation d'un signal optique sur un trajet optique.

Fig. 1                    •————————•  Optical section

50

Fig. 2

Fig. 3

Fig. 4

_500_

```
        ╭─────────────╮
        │   Network   │
        │   system    │
        ╰─────────────╯
               │
               ▼
    ┌─────────────────────┐  ⌐ 510
    │  Obtaining a set of PI │
    │   parameter values  │
    └─────────────────────┘
               │
               ▼
  ┌────────────────────────────────┐
  │   ┌─────────────────────┐  ⌐ 520      ⌐ 515
  │   │   Calculating QoT    │
  │   └─────────────────────┘
  │              │
  │              ▼
  │   ┌─────────────────────┐  ⌐ 530
  │   │  Assessing feasibility │
  │   │      verdicts       │
  │   └─────────────────────┘
  └────────────────────────────────┘
               │
               ▼
    ┌─────────────────────┐  ⌐ 540
    │  Routing optical signals │
    │    via Optical Paths  │
    └─────────────────────┘
               │
               ▼
```

Fig. 5

<u>600</u>

```
           ┌──────────┐
           │   Node   │
           └─────┬────┘
                 │
    ┌────────────▼──────────────┐
    │   Obtaining a set of PI   │── 610
    │     parameter values      │
    └────────────┬──────────────┘
                 │
  ┌──────────────▼─────────────────────┐
  │    ┌────────────────────┐          │
  │    │   Calculating QoT  │── 620    │── 615
  │    └─────────┬──────────┘          │
  │              │                     │
  │    ┌─────────▼──────────┐          │
  │    │ Assessing feasibility │── 630 │
  │    │      verdicts       │         │
  │    └─────────┬──────────┘          │
  └──────────────┼─────────────────────┘
                 │
    ┌────────────▼──────────────┐
    │  Routing optical signals  │── 640
    │      via Optical Paths    │
    └────────────┬──────────────┘
                 │
```

Fig. 6

700

```
        ╭──────────╮
        │   Node   │
        ╰────┬─────╯
             │
┌────────────┼──────────────────┐
│            ▼                   │
│   ┌─────────────────┐          │
│   │ Determining     │╮  710    │
│   │ values of       │╯         │
│   │ PI parameters   │          │
│   └────────┬────────┘          │
│            │                   │
│            ▼                   │
│   ┌─────────────────┐          │
│   │ Generating a    │╮  720    │
│   │ structured      │╯         │
│   │ set of PI values│          │
│   └────────┬────────┘          │
│            │                   │
│            ▼                   │
│   ┌─────────────────┐          │
│   │ Distributing the│╮  730    │
│   │ structured set  │╯         │
│   │ of PI values    │          │
│   └────────┬────────┘          │
│            │                   │
└────────────┘                   
             ▼
```

Fig. 7

Fig. 8A

Fig. 8B

Fig. 9